# EUROPEAN PATENT APPLICATION

(11) **EP 2 772 376 A1**
(43) Date of publication of application: **03.09.2014**
(21) Application number: 13156987.3
(22) Date of filing: 27.02.2013
(51) Int. Cl.: B60J 1/12, E02F 9/16

(54) **Body panel and roof of a vehicle cabin formed by or comprising such a body panel.**

(71) Applicant: Vitalo Industries NV, 8760 Meulebeke (BE)
(72) Inventor: Meyns, Steven, 8760 Meulebeke (BE); Bonte, Christophe, 8760 Meulebeke (BE)
(74) Representative: BiiP cvba

(57) **Abstract**

Body panel (3) for use as a falling object protective structure in a vehicle (1), formed by two interconnected sheets (6,7) of thermoplastic material, a first sheet (6) shaped in relief forming at least one shock absorbing projection (16) extending in a direction (AA') towards the second sheet (7) and comprising multiple projection steps (17) between a projection top (18) and a projection base (19) and having a stepped triangular cross-sectional profile (20), each projection step (17) formed by a step wall (21) defined between a step wall foot (22) and a step wall upper edge (23), the step wall foot (22) of which surrounded by a step wall upper edge (23) of the next projection step (17).

## Description

The present invention relates to a body panel.

More in particular, the invention relates to a body panel for use as a falling object protective structure (FOPS) in a vehicle.

A body panel in accordance with the invention is typically intended for being used as a roof of a vehicle cabin, or can be just a part of such a roof.

It is however not excluded from the invention to use a body panel according to the invention in other locations of a vehicle body in general and in other locations of a vehicle cabin or another framework in particular, for example as a side panel, a door panel, a back panel, a front panel of a vehicle or vehicle cabin.

A body panel according to the invention is typically intended for protecting an operator in a vehicle and in particular in a vehicle cabin against falling objects, but it can be used for other purposes for example in order to realize a hood for protecting a vehicle engine against damage caused by falling objects and so on.

Without restricting the invention to such applications, a body panel according to the invention is especially intended for use in industrial vehicles, such as earth-moving equipment as for example dumper trucks, front-loaders, cranes used in mining, on building or road construction sites, or transport equipment such as lorries, fork lifts and so on, or for use in agricultural vehicles such as tractors and the like.

It is clear that in these harsh environments there is often a non-negligible chance that objects fall on the vehicle cabin, so that there is a need for protecting the operator against injure or sensible and expensive parts of the vehicle against damage, caused by possibly falling objects.

What's more, safety legislation has been modified recently and is now more stringent as far as the protection against falling objects is concerned.

The falling objects can for example be rocks and stones in a mining environment, an article falling from a pallet during loading and off-loading of a vehicle, branches of a tree in a forest and so on.

According to the state of the art, some known vehicles are provided with a falling object protective structure which is an additional structure provided externally on the vehicle structure, typically around a vehicle cabin, and which mostly consists of a steel frame forming a grid which prevents objects of a certain size to reach the vehicle structure.

A disadvantage of these known types of externally provided FOPS is that they take a lot of space, are very heavy, are complicated to fabricate and require a lot of time and labor during assembly, which make them also expensive.

Other known vehicles are often just executed with known body panels which are entirely made of a metal sheet.

In most cases, these known body panels in the form of metal sheets are not especially adapted for the purpose of providing protection against falling objects and these metal sheets are therefore not sufficiently robust.

In other cases, the known body panels in the form of metal sheets are to the contrary intended for providing some protection against falling objects, in which case the metal sheets are again rather thick, heavy and expensive.

In still other cases, the roof of vehicle cabins known according to the state of the art are often made with body panels which are fabricated at least partly with a thermoplastic material.

In order to provide the needed structural strength, for example with the intention to realize a falling object protective structure, the thermoplastic part of such body panels is usually reinforced by other materials.

For this purpose steel parts or steel plates are often integrated in the thermoplastic material, while in other cases the thermoplastic material is reinforced by glass fibers or the like.

Disadvantages of these known reinforced body panels used as a FOPS are that they are still difficult to make, not flexible in design, expensive, while it is not easy to recycle the materials used.

It is therefore an objective of this invention to overcome one or more of the above-mentioned drawbacks or possibly other non-mentioned drawbacks of the known body panels.

In particular, it is an aim of the invention to realize a body panel which has a sufficiently high structural strength in order to serve as a FOPS, which is lightweight, preferably made of a material that is easy to recycle and which is flexible in design and easy in its fabrication.

To this end, the present invention relates to a body panel for use as a falling object protective structure (FOPS) in a vehicle, the body panel being formed by two sheets of thermoplastic material, i.e. a first sheet and a second sheet, which are interconnected into a hollow body enclosing one or more cavities, the first sheet shaped in relief to form at least one shock absorbing projection which is extending in a direction towards the second sheet, the shock absorbing projection comprising multiple projections steps between a projection top and a projection base and having a stepped triangular cross-sectional profile, each projection step formed by a step wall having a certain height defined between a step wall foot and a step wall upper edge, the step wall foot of each projection step surrounded by a step wall upper edge of the next projection step as considered in a direction towards the projection base.

A first advantage of such a body panel in accordance with the invention is that it is entirely made of thermoplastic material so that it is very lightweight and very easy to recycle.

The core of the invention is contained in the particular shape proposed for the shock absorbing projection or shock absorbing projections provided in the first sheet of the body panel.

A first aspect of the proposed shape of such a shock absorbing projection is that it can be formed by simply providing the first sheet with a relief, for example in a mold or in a stamping press or the like, so that it is easily manufactured. Another and even more important aspect of the proposed shape of such a shock absorbing projection is that it has very good shock absorbing properties.

Indeed, a shock absorbing projection as proposed according to the invention has a stepped cross-sectional profile whereby each projection step has an outer circumference at the concerned step foot which is completely contained within the circumference of the step wall upper edge of the former projection step, as considered in a direction towards the projection top.

Furthermore, the shock absorbing projection is directed with its projection top towards the second sheet.

As a consequence, when an object falls on the second sheet and has enough energy to deform that second sheet to such an extent that also a force is exerted on a shock absorbing projection of the first sheet, the concerned shock absorbing projection is firstly subjected to this crushing force at its projection top.

So, a possible deformation of the shock absorbing projection due to a falling object starts at its top and will, depending on the magnitude of the exerted force, possibly proceed towards the projection base.

Hereby, every projection step has such a shape that it can be crushed within the next projection step.

As a consequence, during each further step in the deformation of a shock absorbing projection more and more energy is adsorbed, while on the other hand the final total deformation visible at the outer surface of the body panel formed by the first sheet can be kept very small.

That is the reason why the proposed shape of the shock absorbing projections is very efficient for absorbing shocks caused by falling objects.

In a preferred embodiment of a body panel according to the invention, the first sheet and second sheet are formed and interconnected in a twin sheet thermoforming process.

In this technique the two sheets of thermoplastic material are each given the required shape in a separate mold under a vacuum or under high pressure and while the sheets are in their molted form the molds are brought together in order to form the interconnection between both sheets.

It is clear that such a thermoforming technique ensures a very productive way of fabricating such body panels and that it is a flexible technique where it comes to a modification of the shapes to be produced.

The invention also relates to a roof of a vehicle cabin for use in an industrial or agricultural environment formed by or comprising a body panel according to the invention as described above, the body panel being intended for protecting an operator in a vehicle cabin against falling objects and whereby the roof has a mainly rectangular or square shape, the second sheet forming the outer roof surface of the vehicle cabin and shock absorbing projections in the first sheet being at least located in a zone which is covering an operator seat.

Indeed, according to the invention, it has been discovered that a body panel as proposed by the invention is indeed suitable for having sufficient structural strength in order to be able to take loads exerted by falling objects and to ensure the safety of a person which is protected against these falling objects solely by means of a body panel according to the invention which is entirely made of thermoplastic material and wherein no other materials are used for its reinforcement.

With the intention of better showing the characteristics of the invention, hereafter, as example without any limitative character, some preferred embodiments are described of a roof of a vehicle cabin formed by a body panel in accordance with the invention, with reference to the accompanying drawings, wherein:
figure 1 represents a perspective view on an agricultural vehicle, i.e. a tractor provided with a roof according to the invention;
figure 2 represents a top view on a larger scale on the roof of figure 1 in a direction indicated by arrow F2;
figure 3 and 4 represent respectively a perspective view and a top view on a part of the first sheet of the roof, represented in figure 2 and indicated by F3 and F4;
figures 5 to 7 are cross-sectional views through the roof represented in figure 2, in a plane indicated respectively by lines V-V to VII-VII, the roof executed according to a first embodiment of the invention;
figures 8 to 10 represent on a larger scale the parts indicated by F8 to F10, respectively in figures 5 to 7; and,
figures 11 to 16 represent in manner similar as in figures 5 to 10 the corresponding parts of the roof represented in

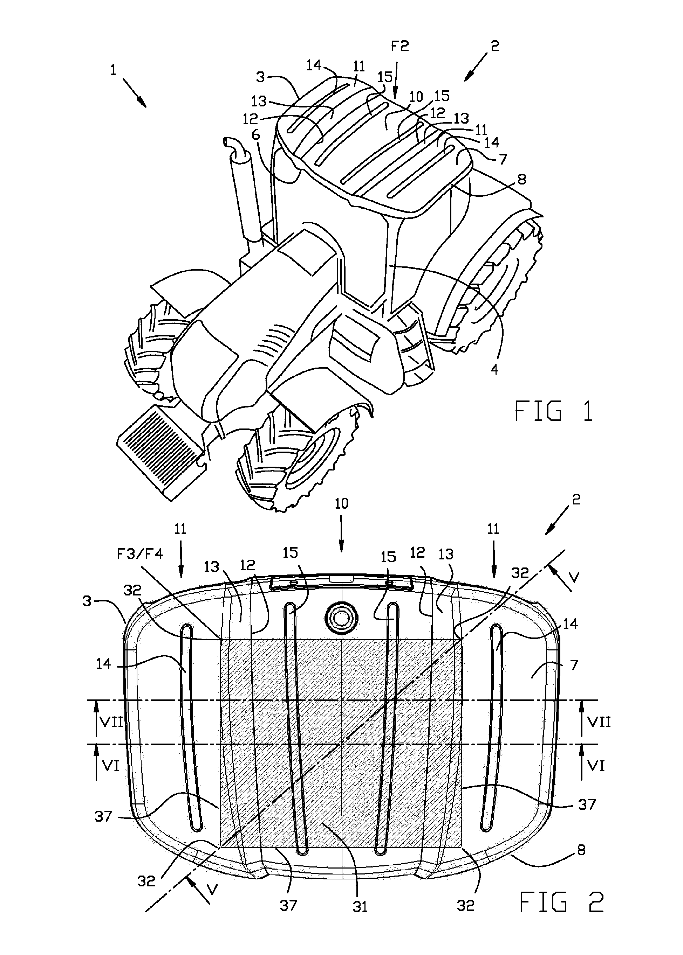

figure 2 but executed according to a second embodiment of the invention.

The tractor 1 represented in figure 1 is provided with a roof 2, which is in this case entirely formed by a body panel 3 in accordance with the invention.

The body panel 3 is hereby mounted or integrated into a tractor cabin 4 and spans the entire space provided in the vehicle cabin 4 for an operator conducting the tractor 1.

Nevertheless, in other embodiments according to the invention the body panel 3 could be just a part of a roof 2 as well.

The roof 2 has a mainly rectangular or square shape, but other shapes are not excluded from the invention.

The body panel 3 which is forming the roof 2 of the tractor 1 is actually a hollow body 5 and consists of a first sheet 6 and a second sheet 7, which are both entirely made of a thermoplastic material.

The first sheet 6 is forming the interior side of the roof 2 inside the vehicle cabin 4 and the second sheet 7 is forming the outer roof surface 7 of the vehicle cabin 4.

Both sheets 6 and 7 are interconnected, in this case at least at the outer border 8 of the roof 2.

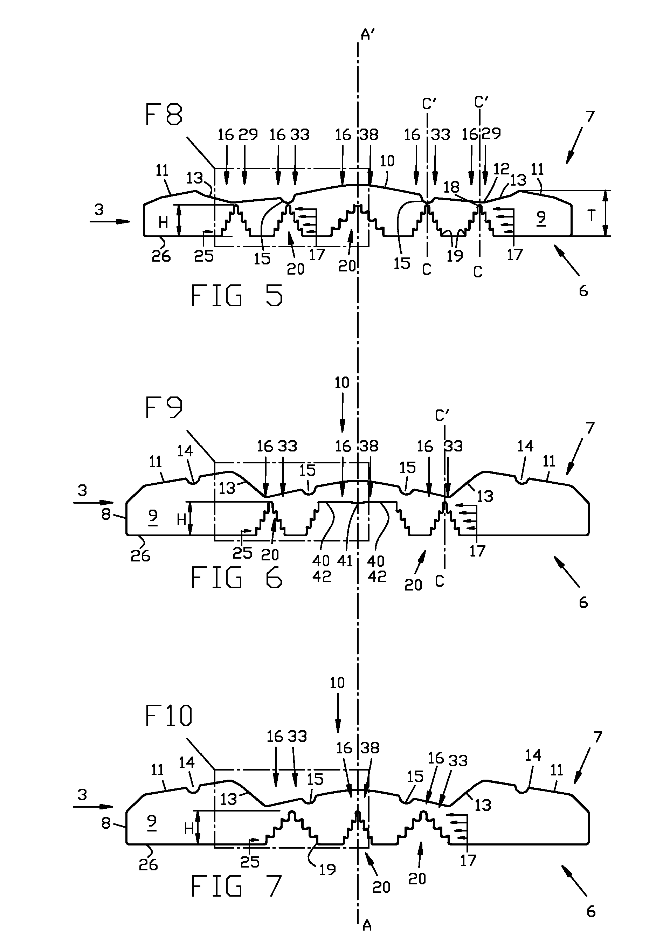

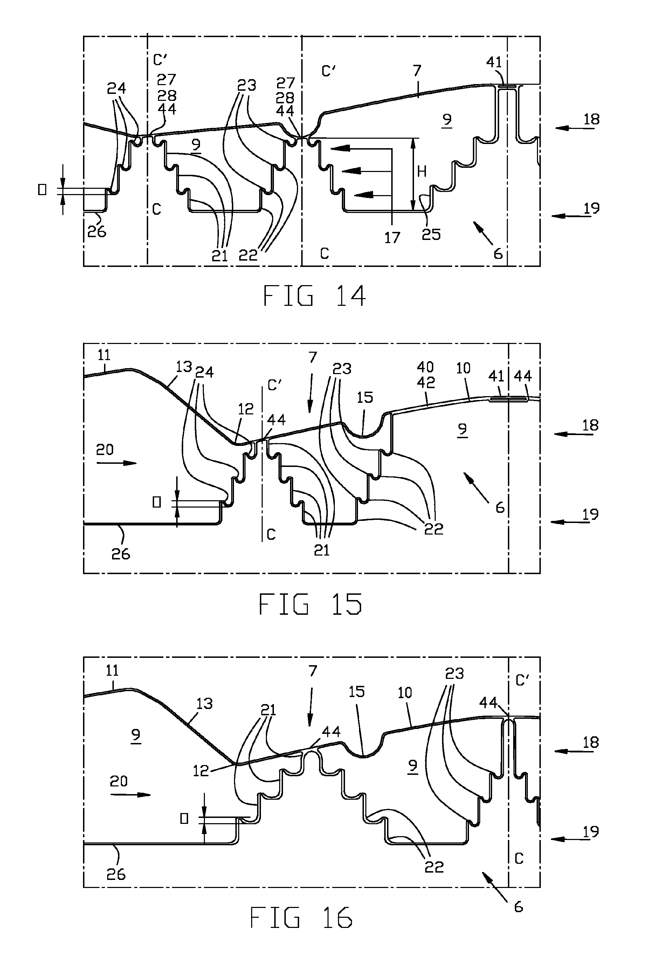

Furthermore, at other places the first sheet 6 and the second sheet 7 are separated from one another to form the hollow body 5, enclosing one or more cavities 9, as can be seen in more detail in the cross-sectional figures 5 to 16.

In that way, the roof 2 is provided with a certain thickness T.

This thickness T is however not constant over the entire surface of the roof 2.

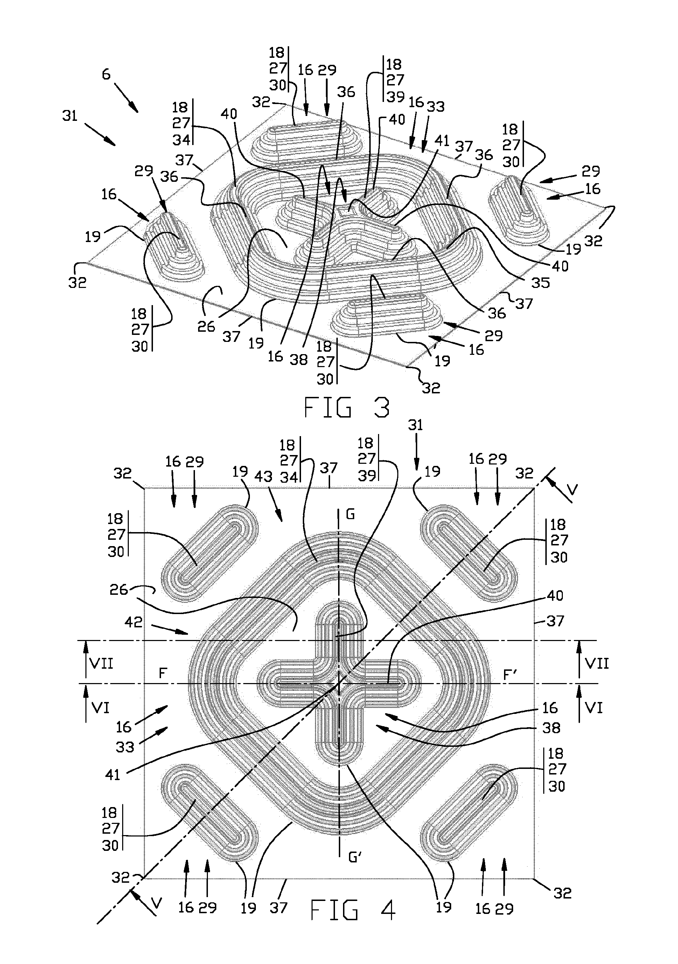

Indeed, the second sheet 7, an enlarged top view of which represented in figure 2, has not a flat surface but is profiled, while also the first sheet 6 is provided with relief as is illustrated for example in more detail in figures 3 and 4.

In particular, the second sheet 7 comprises a central zone 10 which is somewhat lowered with respect to two outer zones 11.

Furthermore, at each border 12 between the central zone 10 and the outer zones 11, there is an elongated and inclined transition zone 13.

Centrally in each outer zone 11, also an elongated depression 14 is present which is more or less parallel with the border 12, while a pair of similar depressions 15 is provided in the central zone 10.

All these features of the second sheet 7 give the roof 2 its' outer shape and provide the roof 2 with a certain structural strength which is nevertheless not sufficient in order to cope with the forces usually present when an objects is falling on the roof 2.

The shock absorbing capacity of the roof 2 is mainly contained in the first sheet 6, which will now be described more in detail by referring to figures 3 to 16.

As can be clearly seen in figures 3 and 4, the first sheet 6 is provided with relief in order to form multiple shock absorbing projections 16.

According to the invention, these shock absorbing projections 16 have all some common characteristics.

First of all, the shock absorbing projections 16 are all extending in a direction AA' towards the second sheet 7, this direction AA' being mainly perpendicular to said second sheet 7.

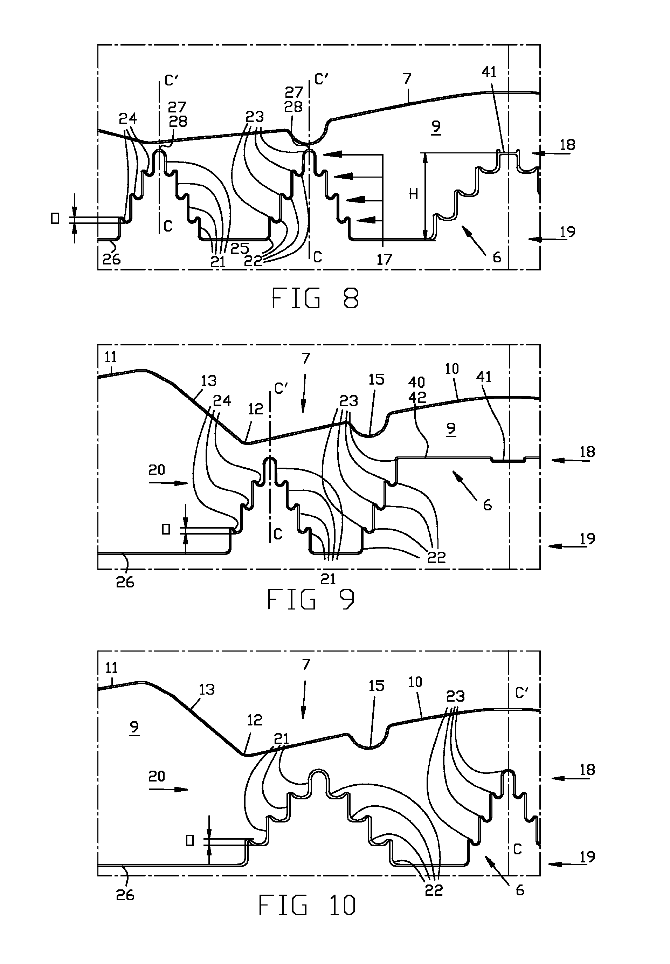

Furthermore, each projection 16 comprises multiple projection steps 17 between a projection top 18 and a projection base 19, resulting in a stepped triangular cross-sectional profile 20, as is clearly illustrated in the enlarged cross-sectional views of figures 8 to 10 for example.

Each projection step 17 is formed by a step wall 21 having a certain height H which is defined between a step wall foot 22 and a step wall upper edge 23.

Moreover, the step wall foot 22 of each projection step 17 is surrounded by the step wall upper edge 23 of the next projection step 17 as considered in a direction from the projection top 18 towards the projection base 19.

In the embodiments represented in the figures, the concerned step walls 21 of each projection step 17 have a step wall upper edge 23 which forms a ridge 24 which extends by an offset distance O above the step foot 22 of the next, overlying projection step 17, as considered in a direction towards the projection top 18.

The step wall foot 22 of the last step 25 forming the projection base 19 is surrounded by a flat surface part 26 of the first sheet 6.

As explained in the introduction, in that way the shock absorbing projections 16 have all a shape allowing a deformation under a force exerted in the direction AA' from the projection top 18 towards the projection base 19, whereby each projection step 16 can be pushed within the contours of the next projection step 16 as considered in a direction towards the projection base 19.

The shock absorbing projections 16 therefore form so to speak spring-like elements.

Still another characteristic, which the shock absorbing projections 16 have all in common in the embodiment represented in figures 3 and 4, but which is not necessarily always the case according to the invention, is that each shock absorbing projection 16 is in this case a linear shock absorbing projection 16 in that their projection top 18 has a linear projection top shape, i.e. a shape having substantially only one dimension and following a single projection top line 27 or a plurality of projection top lines 27.

It is however according to the invention not excluded to provide the first sheet 6 with other kinds of shock absorbing projections 16 having a projection top 18 which resembles for example more to a point, i.e. a shape of zero dimensions, or which is delimited rather by a certain area, i.e. by a two dimensional shape.

Preferably and as is also the case in the embodiments represented in figures 3 and 4, in each projection top point 28 of the projection top line 27, the projection tops 18 of the linear shock absorbing projections 16 have locally a triangular cross-sectional profile 20 in the plane perpendicular to the projection top line 27 at that top point 28, which is symmetric with respect to a central axis CC' extending through the concerned top point 28 in a direction parallel with the direction AA' perpendicular to the second sheet 7.

On the other hand, in the embodiments here discussed, the first sheet 6 is provided with shock absorbing projections 16 which can be divided in three different types of such shock adsorbing projections 16.

A first type of linear shock absorbing projection 16 can be classified as being a straight linear shock absorbing projection 29 having a projection top 18 the projection top line 27 of which being aligned along a straight line segment 30.

In the embodiment of figures 3 and 4, the projections 16 are provided in a square zone 31 of the first sheet 6, which is located centrally above an operators' seat in the tractor cabin 4.

In this embodiment, there are four straight linear shock absorbing projections 29, each located in the vicinity of a corner 32 of the square zone 31.

According to the invention it is however not excluded to provide the first sheet 6 with linear shock absorbing projections 16 which have a projection top line 27 which is not straight but curved.

Another type of linear shock absorbing projection 16,a single example of which being present in the embodiment of figures 3 and 4, can be classified as being a closed path linear shock absorbing projection 33 having a projection top 18 the projection top line 27 of which forming a closed path 34.

In the embodiment of figures 3 and 4, the closed path 34 is more or less formed by a polygon 35 formed by multiple straight line segments 36, which polygon 35 is in the represented case a square 35, the corners 37 of which having however a somewhat rounded shape.

The square closed path 34 of the projection top 18 is in the represented case positioned centrally in the above-mentioned square zone 31 of the first sheet 6, while the straight line segments 36 of this square closed path 34 are in the represented case oriented under 45° to the sides 37 of the above-mentioned square zone 31.

Furthermore, the polygonal shock absorbing projection 33 is in this case surrounded by the four straight linear shock absorbing projections 29, the projection top 18 of which being aligned with a straight line segment 30 which is parallel to a straight line segment 36 of the square closed path 34.

In such a configuration is the available space on the first sheet 6 filled in a very efficient way with shock absorbing projections 16.

According to the invention, it is of course again not excluded to provide the first sheet 6 with a relief so to form other types of closed path linear shock absorbing projections 33, the closed path 35 being formed by a closed curve or by a polygon 35 comprising more than four straight line segments 36, possibly even arranged in a completely irregular shape. Still another type of linear shock absorbing projection 16, a single embodiment of which being again present in the embodiment of figures 3 and 4, can be classified as being a linear stellate shock absorbing projection 38, the projection top 18 of which having a linear stellate shape 39 formed by multiple straight line segments 40 radiating from a single center 41.

In this case, the linear stellate shock absorbing projection 38 is a cross-shaped shock absorbing projection 38 the top projection 18 of which having a shape formed by two pairs 42 and 43 of straight line segments 40.

Each line segment 40 has the same length L and radiates from the same single center 41.

The line segments 40 of the pair 42 of line segments 40 are aligned along a direction FF', whereas the line segments 40 of the pair 43 of line segments 40 are aligned along a direction GG' which is perpendicular to the direction FF'.

The cross-shaped shock absorbing projection 38 is provided centrally in the square zone 31 of the first sheet 6.

Furthermore, the cross-shaped shock absorbing projection 38 is surrounded by the closed path linear shock absorbing projection 33.

Again it is not excluded according to the invention to provide the first sheet 6 with a relief in order to form other types of linear stellate shock absorbing projections 38, having more or on the contrary less straight or curved line segments 40 radiating from a single or from multiple centers 41 and the line segments 40 having different lengths or having the same length L.

In the embodiment represented in figures 5 to 10 the projection tops 18 of all the shock absorbing projections 16 are kept at a certain distance from the second sheet 7, so that the hollow body 5 encloses substantially a single cavity 9.

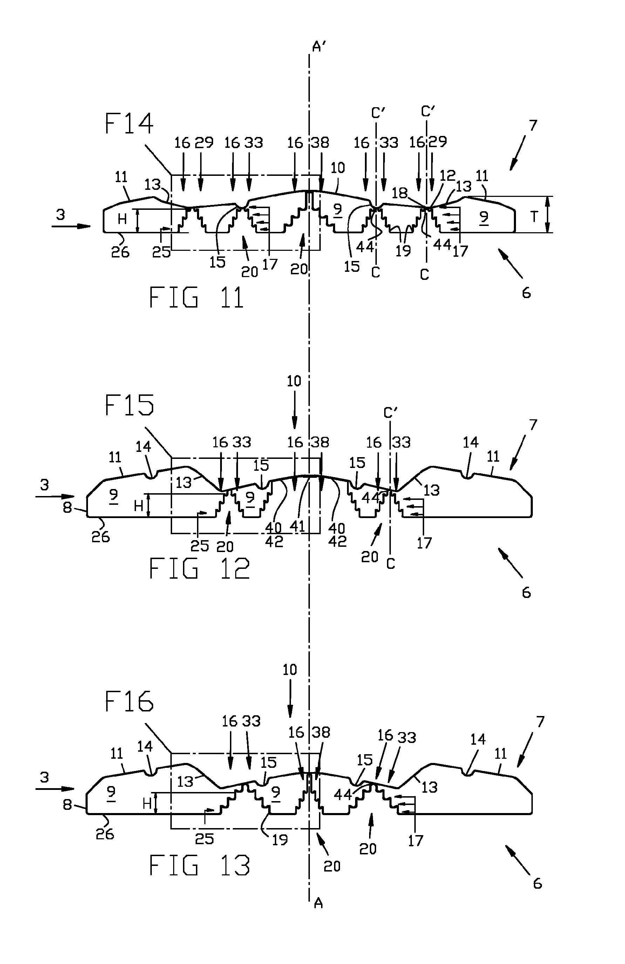

Figures 11 to 16 represent another possible embodiment of a body panel 3 in accordance with the invention wherein this time the projection top 18 of each shock absorbing projection 16 is connected to the second sheet 7 to form an interconnection 44.

In this case the hollow body 5 formed by the body panel 3 encloses therefore multiple cavities 9 separated from one another by the closed path shock absorbing projection 33.

Such an embodiment according to the invention can be very interesting in order to increase the structural strength of the body panel 3.

Preferably, this is obtained during a twinsheet thermoforming process.

Depending on the situation, more or less projection tops 18 can be connected to the second sheet 7.

It is also clear that the figures are just representations intended for ilustrating the different principles behind the invention and that in practice, for example depending on the technique used for realizing such a body panel 3 in accordance with the invention, the dimensions and sizes and the particular shapes of parts of such a body panel 3 can be completely different from what is represented in the figures.

Preferably, according to the invention, things are arranged such that the roof 2 of a vehicle cabin 4 is resistant to an impact of an object dropped from a height sufficient to develop an energy of 1 365 J without penetrating the roof 2.

The present invention is by no means limited to body panels 3 or roofs 2 of a vehicle cabin 4 according to the invention described as examples and illustrated in the drawings, but such body panels 3 or roofs 2 of a vehicle cabin 4 according to the invention can be realised in all kinds of variants, without departing from the scope of the invention.

## Claims

1. Body panel (3) for use as a falling object protective structure (FOPS) in a vehicle (1), **characterized in that** the body panel (3) is formed by two sheets (6,7) of thermoplastic material, i.e. a first sheet (6) and a second sheet (7), which are interconnected into a hollow body (5) enclosing one or more cavities (9), the first sheet (6) shaped in relief to form at least one shock absorbing projection (16) which is extending in a direction (AA') towards the second sheet (7), the shock absorbing projection (16) comprising multiple projections steps (17) between a projection top (18) and a projection base (19) and having a stepped triangular cross-sectional profile (20), each projection step (17) formed by a step wall (21) having a certain height (H) defined between a step wall foot (22) and a step wall upper edge (23), the step wall foot (22) of each projection step (17) surrounded by a step wall upper edge (23) of the next projection step (17) as considered in a direction towards the projection base (19).

2. Body panel (3) according to claim 1, **characterized in that** the first sheet (6) is provided with at least one linear shock absorbing projection (16), the projection top (18) of which having a linear shape (27) comprising one or more projection top lines (27).

3. Body panel (3) according to claim 2, **characterized in that** the linear shock absorbing projection (16) is a straight linear shock absorbing projection (29) having a projection top (18), the projection top line (27) of which being aligned along a straight line segment (30).

4. Body panel (3) according to claim 2, **characterized in that** the linear shock absorbing projection (16) is a closed path linear shock absorbing projection (33) having a projection top (18), the projection top line (27) of which forming a closed path (34).

5. Body panel (3) according to claim 4, **characterized in that** the closed path (34) is a polygon (35) formed by multiple straight line segments (36).

6. Body panel (3) according to claims 3 and 5, **characterized in that** the polygonal shock absorbing projection (33) is surrounded by multiple straight linear shock absorbing projections (29), the projection top line (27) of which being aligned with a straight line segment (30) which is parallel to a straight line segment (36) of the polygon (35).

7. Body panel (3) according to claim 5 or 6, **characterized in that** the polygon (35) is a rectangle or square.

8. Body panel (3) according to claim 2, **characterized in that** the linear shock absorbing projection (16) is a linear stellate shock absorbing projection (38), the projection top (18) of which having a linear stellate shape (39) formed by multiple straight line segments (40) radiating from a single center (41).

9. Body panel (3) according to claim 8, **characterized in that** the linear stellate shock absorbing projection (39) is a cross-shaped shock absorbing projection (39), the top projection (18) of which having a shape formed by two pairs (42,43) of straight line segments (40), each line segment (40) having the same length (L) and radiating from the same single center (41), the line segments (40) of a pair (42,43) aligned along a direction (FF',GG') and the directions (FF,GG') corresponding to each pair (42,43) being perpendicular to one another.

10. Body panel (3) according to claims 4 and 8, **characterized in that** the first sheet (6) is provided with a linear stellate shock absorbing projection (39) which is surrounded by a closed path linear shock absorbing projection (33).

11. Body panel (3) according to any of the preceding claims, **characterized in that** the first sheet (6) and second sheet (7) are formed and interconnected in a twin sheet thermoforming process.

12. Body panel (3) according to any of the preceding claims, **characterized in that** the first sheet (6) has at least one shock absorbing projection (16), the projection top (18) of which being connected to the second sheet (7).

13. Body panel (3) according to any of the preceding claims, **characterized in that** it is entirely formed of thermoplastic material and does not comprise any reinforcement provided by another material.

14. Roof (2) of a vehicle cabin (4) for use in an industrial or agricultural environment comprising a body panel (3) according to any of the preceding claims, **characterized in that** the body panel (3) is intended for protecting an operator in a vehicle cabin (4) against falling objects; the roof (2) has a mainly rectangular or square shape; the second sheet (7) forms the outer roof surface of the vehicle cabin (4) and shock absorbing projections (16) in the first sheet (6) are at least located in a zone (31) which is covering an operator seat.

15. Roof (2) of a vehicle cabin (4) according to claim 14, **characterized in that** the roof (2) is resistant to an impact of an object dropped from a height sufficient to develop an energy of 1 365 J without penetrating the roof (2).
